# EUROPÄISCHE PATENTSCHRIFT

(11) **EP 4 155 111 B1**
(45) Veröffentlichungstag und Bekanntmachung des Hinweises auf die Patenterteilung: **05.06.2024**
(21) Anmeldenummer: 22195153.6
(22) Anmeldetag: 12.09.2022
(51) Int. Cl.: B60L 1/06, B60K 11/02, B60L 3/00, H02K 5/10, H02K 5/22, H02K 9/19, H02K 11/33, H05K 7/20, B60K 1/00, H02K 5/15, H02K 5/173, H02K 5/20, H02K 7/08, H02K 7/116, H02K 15/14, H02K 5/18

(54) **SYSTEMGEHÄUSE EINES E-ACHSEN-MODULS**
SYSTEM HOUSING OF AN E-AXLE MODULE
BOÎTIER DE SYSTÈME D'UN MODULE D'AXE ÉLECTRIQUE

(30) Priorität: 28.09.2021 DE 102021210793
(43) Veröffentlichungstag der Anmeldung: 29.03.2023
(73) Patentinhaber: Robert Bosch GmbH, 70442 Stuttgart (DE)
(72) Erfinder: Maczko, David, 2837 Vertesszölös (HU)

(56) Entgegenhaltungen:
- EP-A1- 3 488 514
- EP-B1- 3 488 514
- WO-A1-2019/051823
- CN-A- 106 911 228
- DE-A1-102010 041 589
- DE-A1-102014 223 909
- DE-A1-102019 105 479

## Beschreibung

### Technisches Gebiet

Die Erfindung bezieht sich auf ein Systemgehäuse eines E-Achsen-Moduls mit einer Statorwicklung und einem Rotor einer elektrischen Maschine, der in mindestens einem ersten Lagerschild und einem zweiten Lagerschild gelagert ist. Des Weiteren bezieht sich die Erfindung auf die Verwendung des Systemgehäuses eines E-Achsen-Moduls in einem elektrisch angetriebenen Fahrzeug.

### Stand der Technik

E-Achsen-Module weisen üblicherweise als Gussbauteile gefertigte Gehäuse auf, die einerseits als urformendes Bauteil aufwändig in der Herstellung sind und andererseits ein relativ hohes Gewicht haben. Gussbauteile verfügen hingegen über gute Wärmeleiteigenschaften und können an die unterschiedlichsten Einsatzbedingungen angepasst und individuell hergestellt werden, was jedoch einer Großserienfertigung im Wege steht.

Andererseits sind modular aufgebaute Getriebegehäuse bekannt, die jedoch mit dem Nachteil einhergehen, dass diese eine große Anzahl von Bauteilen aufweisen, was die Montage erheblich verteuert und eine Vielzahl von Schnittstellen mit sich bringt, die zu fehlerhaften Montageschritten innerhalb der Montage solcher Gehäuse führen können.

EP3488514 A1 ist als nächstliegender Stand der Technik angesehen und offenbart die Merkmale der Präambel des unabhängigen Anspruchs 1.

Die Aufgabe der Erfindung ist, ein Systemgehäuse eines E-Achsen-Moduls für ein elektrisch angetriebenes Fahrzeug bereitzustellen, das gegenüber aus dem Stand der Technik bekannten Systemgehäusen von E-Achsen-Modulen eine geringere Anzahl von Bauteilen aufweist und kostengünstig hergestellt werden kann.

Die erfindungsgemäße Aufgabe wird durch ein Systemgehäuse gemäß den Merkmalen des unabhängigen Anspruchs 1 gelöst. Vorteilhafte Ausgestaltungen des Systemgehäuses eines E-Achsen-Moduls werden in den abhängigen Ansprüchen beschrieben.

Die Erfindung bezieht sich auch auf die Verwendung des Systemgehäuses eines E-Achsen-Moduls in einem elektrisch angetriebenen Fahrzeugs gemäß den Merkmalen des unabhängigen Anspruchs 11.

### Darstellung der Erfindung

Erfindungsgemäß wird ein Systemgehäuse eines E-Achsen-Moduls vorgeschlagen, wobei das E-Achsen-Modul eine Statorwicklung und einen Rotor einer elektrischen Maschine umfasst, der in mindestens einem ersten Lagerschild und einem zweiten Lagerschild gelagert ist. Das erfindungsgemäß vorgeschlagene Systemgehäuse ist als doppelwandiges extrudiertes Gehäuse ausgeführt, das ein Kanalsystem umfasst, welches sich unterhalb einer Kühlfläche eines Montageraums einer Leistungselektronik erstreckt.

Durch das erfindungsgemäß vorgeschlagene Systemgehäuse, welches in einer vorteilhaften Weiterbildung des erfindungsgemäßen Systemgehäuses als doppelwandiges extrudiertes Strangpressprofil ausgebildet sein kann, wird ein kostengünstiges großseriengeeignetes Bauteil bereitgestellt, welches sich durch eine Außengeometrie auszeichnet, an der an unterschiedlichen Stellen eine Vielzahl von Lagerungs- und Dämpfungselementen sowie Befestigungselementen vorgesehen werden kann, die an unterschiedlichste Einbaubedingungen angepasst werden können, wodurch sich eine sehr hohe Flexibilität bei gleichzeitig kostengünstiger Herstellung erreichen lässt.

In einer vorteilhaften Weiterbildung des erfindungsgemäß vorgeschlagenen Systemgehäuses weist dieses eine Außengeometrie auf, die eine Anzahl von sich im Wesentlichen in Längsrichtung des Systemgehäuses verlaufenden Rippen aufweist. Diese Rippen können, da sie in Umfangsrichtung des Systemgehäuses voneinander beabstandet ausgeführt sind, als Befestigungsstellen sowohl für Lagerungs- und Dämpfungselemente als auch für Befestigungselemente an der Fahrzeugkarosserie dienen.

In einer vorteilhaften Weiterbildung des erfindungsgemäß vorgeschlagenen Systemgehäuses sind an der Außengeometrie des Systemgehäuses mindestens ein Lagerungs- und/oder Dämpfungselement sowie mindestens ein Befestigungselement angeordnet. Da diese an der Außengeometrie seitlich in Längsrichtung des Systemgehäuses gesehen verschiebbar sind, können individuelle Kundenwünsche berücksichtigt werden hinsichtlich des Einbauortes beziehungsweise hinsichtlich der vorzusehenden Schnittstellen zwischen dem Systemgehäuse des E-Achsen-Moduls und dem Fahrzeug beziehungsweise der Fahrzeugkarosserie.

Darüber hinaus ist bei einer vorteilhaften Weiterbildung des erfindungsgemäß vorgeschlagenen Systemgehäuses dessen Außengeometrie so beschaffen, dass dieses insbesondere eine Anzahl von Nuten, die vorzugsweise als Längsnuten ausgeführt sind, umfasst. Auch hierdurch können die Vorteile eines im Wesentlichen doppelwandig, als extrudiertes Strangpressprofil ausgebildeten Systemgehäuses genutzt werden, da die Nuten unmittelbar in das Gehäuse, bei dessen Fertigung als Stranggussbauteil, eingebracht werden können. Die sich über die gesamte Länge in Längsrichtung des Systemgehäuses erstreckenden Nuten sind durchgängig ausgeführt, so dass an unterschiedlichen Stellen innerhalb der einzelnen Nuten Befestigungspunkte vorgesehen werden können, was ebenfalls eine hohe Varianz des erfindungsgemäß vorgeschlagenen Systemgehäuses mit sich bringt und flexibel an die unterschiedlichsten Kundenwünsche angepasst werden kann.

Eine vorteilhafte Weiterbildung des erfindungsgemäß vorgeschlagenen Systemgehäuses zeichnet sich des Weiteren dadurch aus, dass das Kühlkanalsystem unterhalb der Kühlfläche des Montageraumes der Leistungselektronik mindestens eine Kühlverrippung umfasst. Das das doppelwandige extrudierte Systemgehäuse durchziehende Kühlkanalsystem kühlt nicht nur den Mantel des Systemgehäuses, sondern ermöglicht darüber hinaus die Kühlung der Kühlfläche des in das Systemgehäuse integrierten Aufnahmeraums für die Leistungselektronik . Ist unterhalb der Aufnahmefläche für eine untere Planfläche des Bauteils der Leistungselektronik eine Kühlverrippung vorgesehen, so kann ein erheblich verbesserter Wärmetransport von Abwärme, die die Leistungselektronik während ihres Betriebs produziert, gewährleistet werden. Dies bedeutet, dass durch das erfindungsgemäß vorgeschlagene Kühlsystem gezielt an Stellen effektiv gekühlt werden kann, wo eine hohe Abwärmeproduktion auftritt.

In einer vorteilhaften Weiterbildung des erfindungsgemäß vorgeschlagenen Systemgehäuses weist das Kühlkanalsystem im Bereich der Kühlfläche entweder eine Öffnung zur direkten Kühlung der Leistungselektronik auf oder die Kühlfläche der Leistungselektronik ist mittelbar über die bereits vorstehend erwähnte Kühlverrippung unterhalb der Kühlfläche temperierbar. Durch die erfindungsgemäß vorgeschlagene Lösung besteht die Möglichkeit der Implementierung einer direkten und einer indirekten Kühlung des Leistungselektronikbauteils, dessen Montageraum in das doppelwandige extrudierte Systemgehäuse integriert ist.

Erfindungsgemäß weist das Systemgehäuse einen mittig in diesem montierten zusätzlichen Lagerträger auf, der den Rotor der elektrischen Maschine zwischen der Statorwicklung im Systemgehäuse einerseits und der Getriebeanordnung auf der Rotorwelle des Rotors andererseits abstützt und zudem diese Komponenten voneinander trennt. Durch den Lagerträger, der im Systemgehäuse in dessen Mitte angebracht ist, wird nicht nur eine zusätzliche Lagerungsmöglichkeit der Rotorwelle des Rotors der elektrischen Maschine kreiert, sondern darüber hinaus auch ein "nasslaufender" Teil, in dem die Getriebeanordnung untergebracht ist vom "trockenen" Teil des Rotors der elektrischen Maschine getrennt wird. Demnach übernimmt der zusätzliche Lagerträger neben einer zusätzlichen Abstützfunktion auch die Trennung von "nasslaufendem" Teil und trockenem Teil innerhalb des Systemgehäuses des E-Achsen-Moduls.

Das erfindungsgemäß vorgeschlagene Systemgehäuse kann in einer vorteilhaften Ausführungsvariante derart gestaltet sein, dass die Leistungselektronik in dem im Systemgehäuse vorgehaltenen Montageraum im Wesentlichen in vertikaler Richtung montiert wird, wobei die Leistungselektronik Kontaktierungsöffnungen aufweist, die bei der Montage in vertikaler Richtung in Kontaktierungsöffnungen zur Statorwicklung einfahren.

In einer anderen vorteilhaften Ausführungsvariante des erfindungsgemäß vorgeschlagenen Systemgehäuses kann dieses derart konfiguriert sein, dass die Leistungselektronik in den Montageraum im Wesentlichen in horizontaler Richtung seitlich eingeschoben wird, also als Einschubteil ausgeführt sein kann.

Bei der letztgenannten vorteilhaften Ausführungsvariante des erfindungsgemäß vorgeschlagenen Systemgehäuses können beispielsweise sowohl die Kontaktierungen der Leistungselektronik als auch deren Kontaktöffnungen zur Statorwicklung in Schrägorientierung ausgeführt sein, so dass die Kontaktierungen bei der seitlichen Montage, d. h. dem seitlichen Einschieben der Leistungselektronik in den Montageraum, die Kontaktierungsöffnungen zur Statorwicklung unmittelbar kontaktieren.

Bei einer vorteilhaften Weiterbildung des erfindungsgemäß vorgeschlagenen Systemgehäuses kann alternativ auch eine elektrische Kontaktierung zwischen der Leistungselektronik und der Statorwicklung über mindestens ein Kontaktierungsteil hergestellt werden.

### Vorteile der Erfindung

Durch die erfindungsgemäß vorgeschlagene Ausführung des Systemgehäuses als doppelwandiges, extrudiertes Gehäuse, insbesondere als von einem extrudierten Strangpressprofil abgetrennten Profils, kann die Außengeometrie zur individuellen Befestigung genutzt werden. Dazu umfasst die Außengeometrie einer vorteilhaften Weiterbildung des erfindungsgemäß vorgeschlagenen Systemgehäuses sich im Wesentlichen kontinuierlich in Längsrichtung des Systemgehäuses gesehen erstreckende Verrippungen, die in Umfangsrichtung des Systemgehäuses gesehen voneinander beabstandet sind.

Innerhalb dieser Abstände, d. h. zweier benachbarter Rippen, können Lagerungs- und Dämpfungselemente, beispielsweise Gummilager oder dergleichen, sowie Befestigungselemente, die eine Verschraubungsmöglichkeit zur Karrosserie eines Fahrzeugs darstellen, vorgesehen werden. Dies erhöht in signifikanter Weise die Flexibilität der Befestigungsstellen des erfindungsgemäß vorgeschlagenen Systemgehäuses und erlaubt eine individuelle Kundenkonfiguration. Es müssen an der Außengeometrie lediglich die Befestigungspunkte so variiert werden, dass diese zu den am Fahrzeug vorgesehenen Befestigungspunkten korrespondieren.

Darüber hinaus weist das erfindungsgemäß vorgeschlagene Systemgehäuse einen erheblichen Gewichtsvorteil auf verglichen mit im Urformverfahren des Gießens hergestellten Gehäusen. Weiterhin sind die Schnittstellen durch eine Minimierung von Bauteilen erheblich reduziert, so dass Fehler bei der Montage nahezu ausgeschlossen werden können. Das doppelwandig extrudiert ausgebildete Systemgehäuse umfasst mindestens zwei dieses verschließende seitliche Lagerplatten, in denen Lager zur Aufnahme des Rotors der elektrischen Maschine aufgenommen sind. Darüber hinaus zeichnet sich das erfindungsgemäß vorgeschlagene Systemgehäuse dadurch aus, dass in dieses ein Montageraum für die Leistungselektronik integriert ist und eine den Montageraum zur Aufnahme der Leistungselektronik begrenzende Kühlfläche in das Kühlkanalsystem des erfindungsgemäß vorgeschlagenen Systemgehäuses integriert ist. Es kann einerseits eine direkte Kühlung der Leistungselektronik durch eine Öffnung in der Kühlfläche erfolgen, andererseits besteht alternativ die Möglichkeit, durch Vorsehen mindestens einer Kühlverrippung innerhalb der Kühlfläche eine indirekte Kühlung der Leistungselektronik durch Wärmeabfuhr von deren Unterseite an die Kühlfläche in das Kühlfluid vorzunehmen. Durch die alternativ vorgeschlagene Lösung sind beide Varianten der Kühlung, d. h. die direkte sowie die indirekte Kühlung möglich.

Bei einer vorteilhaften Weiterbildung des erfindungsgemäß vorgeschlagenen Systemgehäuses kann die Leistungselektronik in den Montageraum im Wesentlichen in vertikaler Richtung, d. h. von der Oberseite des Systemgehäuses her, erfolgen. Es besteht alternativ die Möglichkeit, die Leistungselektronik in horizontaler Richtung, d. h. als Einschubbauteil im Montageraum für die Leistungselektronik zu montieren. Bei der Montage, ob in vertikaler oder in horizontaler Richtung, können die bevorzugt an der Unterseite der Leistungselektronik ausgeführten Kontaktierungen unmittelbar mit Kontaktierungsöffnungen der Statorwicklung im Systemgehäuse kontaktiert werden. Die seitlichen Lagerschilde des Systemgehäuses, die dessen Hohlraum abdichten, können zudem in vorteilhafter Weise so ausgebildet sein, dass diese Deckelteile sowie seitliche Abschlussflächen des Montageraums für die Leistungselektronik im Systemgehäuse darstellen.

Beim erfindungsgemäß vorgeschlagenen Systemgehäuse ist in den Lagerungstellen des Rotors in den Lagerschilden ein zusätzlicher Lagerträger mittig im Systemgehäuse vorgesehen, der die Rotorwelle des Rotors der elektrischen Maschine zusätzlich abstützt.

### Kurze Beschreibung der Zeichnungen

Ausführungsformen der Erfindung werden anhand der Zeichnungen und der nachfolgenden Beschreibung näher erläutert.

Es zeigen:
Figur 1 eine Seitenansicht des erfindungsgemäß vorgeschlagenen Systemgehäuses mit Montageraum für die Leistungselektronik
Figur 2 eine perspektivische Darstellung des erfindungsgemäßen Systemgehäuses gemäß der Darstellung in Figur 1,
Figur 3 den Verlauf einer Kühlfluidströmung durch das doppelwandig ausgeführte, extrudierte erfindungsgemäße Systemgehäuse,
Figur 4 eine perspektivische Ansicht eines komplettierten E-Achsen-Moduls mit in dieses integriertem erfindungsgemäßem Systemgehäuse,
Figur 5 eine perspektivische Widergabe eines Lagerschildes des erfindungsgemäßen Systemgehäuses,
Figur 6.1 eine im Montageraum des erfindungsgemäßen Systemgehäuses montierte Leistungselektronik,
Figur 6.2 ein Detail der Aufnahme der Leistungselektronik im Aufnahmeraum auf der Kühlfläche des erfindungsgemäßen Systemgehäuses,
Figur 7 eine Explosionsdarstellung der Komponenten des erfindungsgemäßen Systemgehäuses,
Figur 8 den Einbau einer Leistungselektronik in vertikaler Montagerichtung auf dem erfindungsgemäßen Systemgehäuse,
Figur 9 die Montage der Leistungselektronik in vertikaler Richtung im erfindungsgemäßen Systemgehäuse und das Aufbringen eines Deckels auf diese,
Figur 10 die Explosionsdarstellung der Komponenten des E-Achsen-Moduls mit dem erfindungsgemäßen Systemgehäuse,
Figur 11 einen in einem Lagerschild montierten Deckel zur Abdeckung des in vertikaler Montagerichtung auf dem erfindungsgemäßen Systemgehäuse montierten Leistungselektronikbauteils,
Figur 12 eine Montage der Leistungselektronik in horizontaler Montagerichtung mit in Schrägorientierung ausgeführten Kontaktierungen und Kontaktierungsöffnungen zur Statorwicklung im erfindungsgemäßen Systemgehäuse,
Figur 13 eine Explosionsdarstellung des erfindungsgemäßen Systemgehäuses mit als Einschubteil ausgebildeter Leistungselektronik, die in horizontaler Montagerichtung montiert wird und mittels einer Halbschale und eines Lagerschildes fixiert ist,
Figur 14 eine Ausführungsvariante des erfindungsgemäßen Systemgehäuses, in dessen Montageraum die als Einschubteil ausgeführte Leistungselektronik eingeschoben wird und mittels eines Kontaktierungsteils mit der Statorwicklung der elektrischen Maschine kontaktiert wird,
Figur 15 eine alternative Ausführungsform des E-Achsen-Moduls 10,
Figur 16 eine weitere alternative Ausführungsform des E-Achsen-Moduls 10 und
Figur 17 eine weitere alternative Ausführungsform des E-Achsen-Moduls 10.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

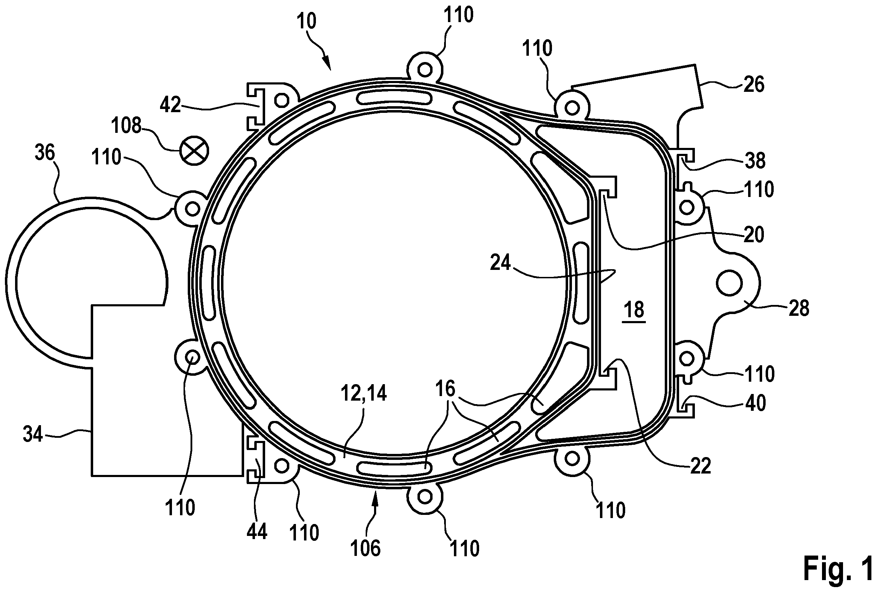

Der Darstellung gemäß Figur 1 ist ein erfindungsgemäß ausgeführtes Systemgehäuse 12 eines E-Achsen-Moduls 10 zu entnehmen. Das Systemgehäuse 12 ist ein doppelwandig ausgeführtes, extrudiertes Gehäuse 14, insbesondere ein Stranggussbauteil. Durch die Doppelwand des extrudierten Gehäuses 14 verläuft ein Kühlkanalsystem 16, wie aus Figur 1 hervorgeht. Am Systemgehäuse 12 befindet sich ein Montageraum 18 zur Aufnahme einer hier nicht näher dargestellten Leistungselektronik. Am erfindungsgemäß vorgeschlagenen Systemgehäuse 12 ist eine Außengeometrie 106 ausgebildet. Die Außengeometrie 106 erstreckt sich im Wesentlichen zur senkrecht in die Zeichenebene verlaufenden Längsrichtung 108. Die Außengeometrie 106 kann vorzugsweise durch eine Anzahl von Rippen 110 gebildet werden. Des Weiteren umfasst die Außengeometrie 106 des extrudierten Gehäuses 14, das als Systemgehäuse 12 dient, eine erste Nut 20 sowie eine zweite Nut 22. Diese erstrecken sich ebenfalls in die Zeichenebene gemäß Figur 1. Die erste Nut 20 und die zweite Nut 22 begrenzen eine Kühlfläche 24. Auf dieser wird die Unterseite einer im Wesentlichen plan ausgebildeten Leistungselektronik aufgebracht und mittels der Nuten 20, 22 fixiert. An der Außengeometrie 106 des Systemgehäuses 12 sind ein erstes Befestigungselement 26 und ein zweites Befestigungselement 28 dargestellt. Des Weiteren sind an der Außengeometrie 106 Lager- und/oder Dämpfungselemente 34, 36 angeordnet.

Mittels der Befestigungselemente 26, 28 sowie der Lager- und/oder Dämpfungselemente 34, 36 kann das Systemgehäuse 12 des E-Achsen-Moduls 10 an individuell am Fahrzeug vorgesehenen Befestigungspunkten befestigt beziehungsweise gelagert werden. Da die Außengeometrie 106 des Systemgehäuses 12 die sich in Längsrichtung 108 erstreckenden Rippen 110 aufweist, ist eine individuelle Positionierung der Befestigungselemente 26, 28 beziehungsweise der Lager- und/oder Dämpfungselemente 34, 36 auf individuelle Weise möglich.

Aus der Seitenansicht gemäß Figur 1 ergibt sich zudem, dass die Außengeometrie 106 eine Anzahl von Nuten, nämlich eine erste Längsnut 38, eine zweite Längsnut 40, eine dritte Längsnut 42 sowie eine vierte Längsnut 44 aufweist. Die Längsnuten 38, 40, 42, 44 können ebenfalls zur Fixierung und Befestigung des Systemgehäuses 12 an individuellen Aufhängungs- und Lagerpunkten im Fahrzeug dienen.

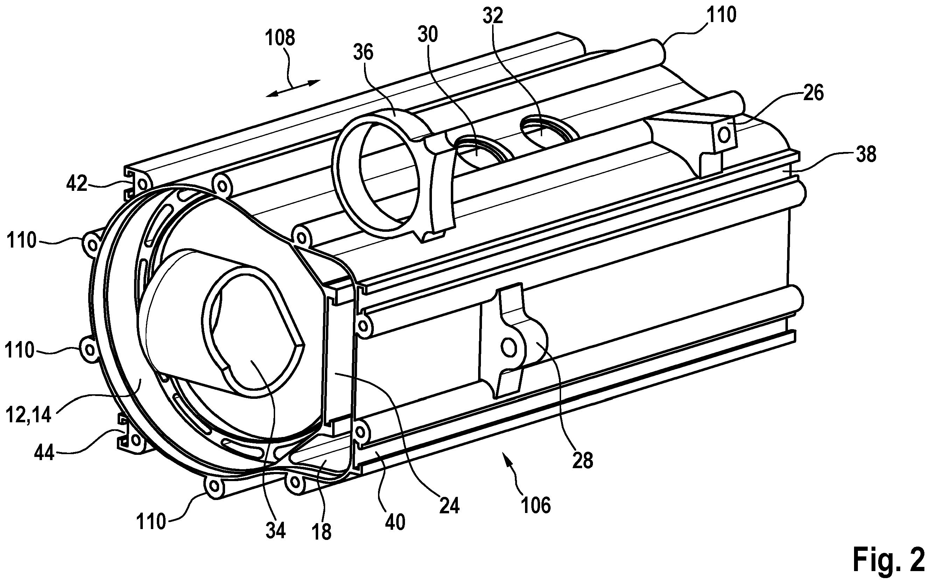

Figur 2 zeigt eine perspektivische Darstellung des erfindungsgemäß ausgeführten Systemgehäuses 12 gemäß Figur 1. Aus der perspektivischen Darstellung gemäß Figur 2 geht hervor, dass der Montageraum 18 zur Aufnahme einer Leistungselektronik in das als doppelwandig extrudiertes Gehäuse 14 ausgebildeten Systemgehäuses 12 integriert ist. Aus der perspektivischen Darstellung gemäß Figur 2 lässt sich zudem entnehmen, dass zwischen benachbarten Rippen 110 der Außengeometrie 106 des Systemgehäuses 12 die Befestigungselemente 26, 28 an individuellen Stellen vorgesehen sind; ebenso verhält es sich mit den Lager und/oder Dämpfungselementen 34, 36, die ebenfalls zwischen benachbarten, sich in Längsrichtung 108 erstreckenden Rippen 110 der Außengeometrie 106 angeordnet sind. Aufgrund der Längserstreckung der Rippen 110 parallel zur Längsrichtung 108 des extrudierten Gehäuses 14 ergeben sich unterschiedliche, individuelle Positionierungsmöglichkeiten und damit flexible Individuallösungen ermöglichende Befestigungsmöglichkeiten als vorteilhafte Weiterbildungen des erfindungsgemäß vorgeschlagenen Systemgehäuses 12 des E-Achsen-Moduls 10.

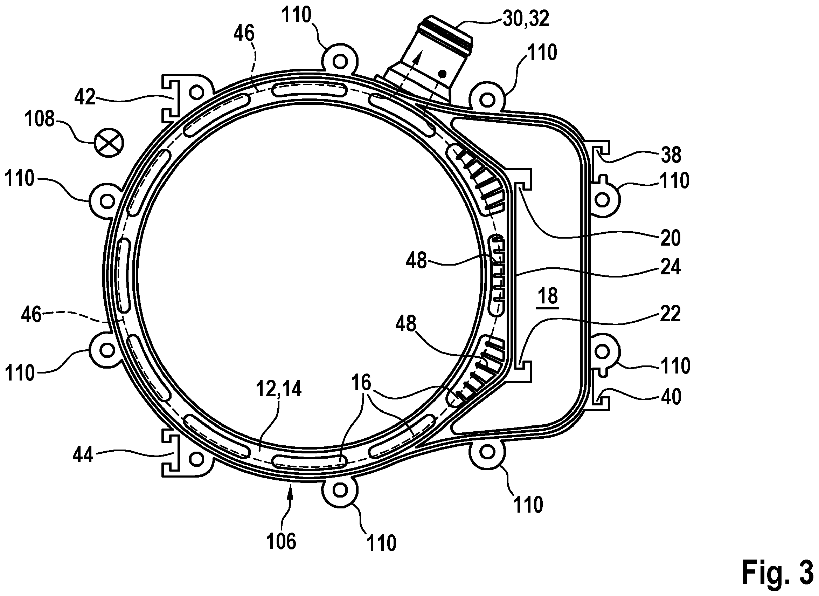

Figur 3 zeigt den Verlauf einer Kühlmittelströmung durch das doppelwandig ausgeführte extrudierte Gehäuse 14.

Wie aus der Seitenansicht gemäß Figur 3 näher hervorgeht, weist das erfindungsgemäß vorgeschlagene Systemgehäuse 12, ausgeführt als doppelwandiges extrudiertes Gehäuse 14 eines Extrusionsprofils, das Kühlkanalsystem 16 auf, welches von der Kühlfluidströmung 46 durchströmt wird. Die Kühlfluidströmung 46 passiert während der Passage des Kühlkanalsystems 16 einen unterhalb der Kühlfläche 24 liegenden Bereich, in welchem mindestens eine Kühlverrippung 48 angeordnet ist. Diese verbessert den Wärmeübergang von der in Figur 3 nicht dargestellten auf der Kühlfläche 24 platzierten Leistungselektronik an das im Kühlkanalsystem 16 zirkulierende Kühlfluid. Dieses wird über einen Einlass 30 dem Kühlkanalsystem 16 des Systemgehäuses 12 zugeführt und verlässt über einen Auslass 32 das Kühlkanalsystem 16 und transportiert die aufgenommene Abwärme aus dem Systemgehäuse 12.

Figur 3 zeigt des Weiteren die sich in die Zeichenebene, d. h. hier mit der Längsrichtung 108 zusammenfallend, ausgebildeten Rippen 110 der Außengeometrie 106. Weiterhin zeigt Figur 3 die sich ebenfalls in Längsrichtung 108 senkrecht zur Zeichenebene gemäß Figur 3 erstreckenden Längsnuten 38, 40, 42, 44. Aus der Darstellung gemäß Figur 3 geht darüber hinaus hervor, dass die Kühlfläche 24 von der ersten Nut 20 sowie der zweiten Nut 22 begrenzt ist und die Kühlfläche 24 im Wesentlichen eben verläuft, um einen verbesserten Wärmeübergang zu realisieren.

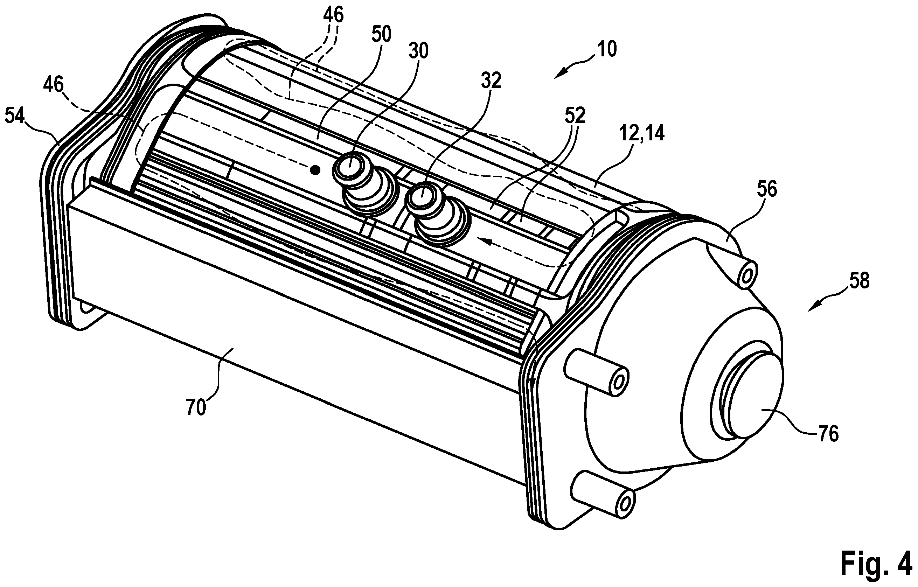

Der perspektivischen Darstellung gemäß Figur 4 ist das E-Achsen-Modul 10 zu entnehmen. Das E-Achsen-Modul 10 umfasst neben dem erfindungsgemäß ausgeführten Systemgehäuse 12, welches als doppelwandiges extrudiertes Gehäuse 14 ausgebildet ist, ein erstes Lagerschild 54 sowie ein zweites Lagerschild 56, das in Glockenform 58 ausgebildet ist. Im Inneren des Systemgehäuses 12 sind eine Statorwicklung 50 sowie eine Getriebeanordnung 52 aufgenommen. Die Getriebeanordnung 52 kann ein ein- oder mehrstufiges Planetengetriebe aufweisen.

Aus Figur 4 geht des Weiteren hervor, dass eine Leistungselektronik 70 im Wesentlichen als rechteckförmiges Bauelement auf dem hier nur angedeuteten Systemgehäuse 12 plan aufgenommen ist. Innerhalb des Systemgehäuses 12, das als doppelwandiges extrudiertes Gehäuse 14 ausgeführt ist, verläuft die Kühlfluidströmung 46 ausgehend vom Einlass 30 zum Auslass 32 und transportiert die im Betrieb des E-Achsen-Moduls 10 entstehende Abwärme aus dem Systemgehäuse 12 hinaus.

Figur 4 zeigt darüber hinaus einen Rotor 76 einer elektrischen Maschine mit dem erfindungsgemäß ausgeführten Systemgehäuse, an dessen Rotorwelle sich die Getriebeanordnung 52 befindet.

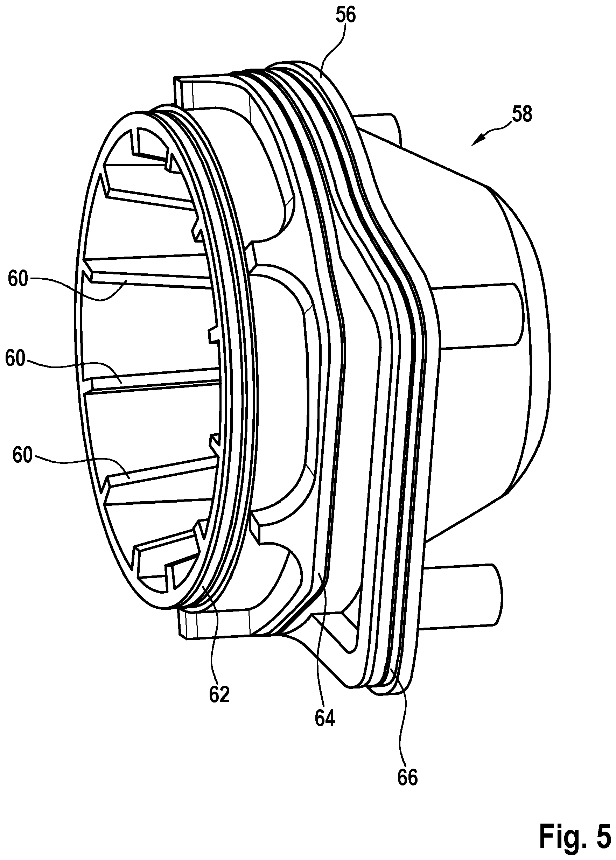

Figur 5 zeigt eine perspektivische Darstellung des zweiten Lagerschilds 56, ausgebildet in Glockenform 58. Das zweite Lagerschild 56 umfasst eine innere Axialverrippung 60 sowie ein erstes ringförmig ausgebildetes Dichtungselement 62, ein zweites, ebenfalls ringförmig ausgebildetes Dichtungselement 64 sowie ein drittes ringförmig ausgebildetes Dichtungselement 66.

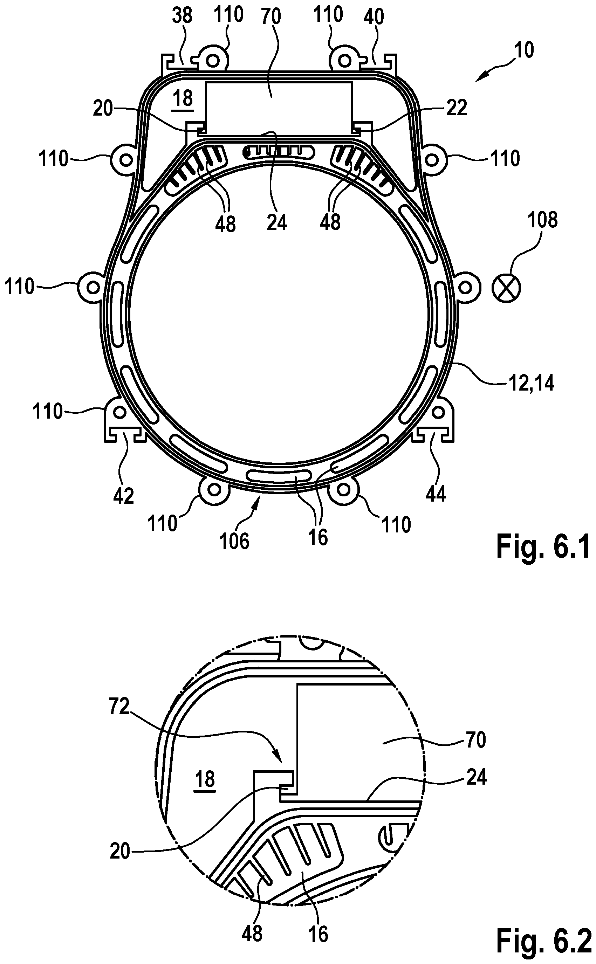

Figuren 6.1 und 6.2 verdeutlichen die Aufnahme der Leistungselektronik 70 im Montageraum 18 des Systemgehäuses 12. Die Leistungselektronik 70 ist beispielsweise seitlich, d. h. in Richtung der Zeichenebene gemäß Figur 6.1 in den Montageraum 18 eingeschoben. Die Leistungselektronik 70 kontaktiert mit ihrer unteren Planfläche die Kühlfläche 24. Unterhalb der Kühlfläche 24 befindet sich mindestens eine Kühlverrippung 48, über welche das Kühlfluid Abwärme abtansportiert, die beim Betrieb der Leistungselektronik 70 entsteht. Figur 6.1 zeigt darüber hinaus, dass die Leistungselektronik 70 in ihrem Fußbereich von der ersten Nut 20 und der zweiten Nut 22 übergriffen, fixiert ist. Die Außengeometrie 106 des Systemgehäuses 12, vorzugsweise als doppelwandiges extrudiertes Gehäuse 14 ausgebildet, weist analog zu den vorstehend beschriebenen Figuren sich in Längsrichtung 108 erstreckende Rippen 110 auf.

Darüber hinaus umfasst die Außengeometrie 106 des vorteilhaft ausgestalteten Systemgehäuses 12 die Längsnuten 38, 40, 42, 44, die sich ebenfalls in Längsrichtung 108, d. h. in die Zeichenebene gemäß Figur 6.1 erstrecken.

Figur 6.2 zeigt im Detail, dass die erste Nut 20 mit einem Übergriff 72 den unteren, verbreiterten Bereich der Leistungselektronik 70 mit Spiel überdeckt. Wie aus der vergrößerten Darstellung gemäß Figur 6.2 hervorgeht, befinden sich unterhalb beziehungsweise neben der Kühlfläche 24 die Kühlverrippungen 48, über welche eine Optimierung des Abwärmetransports der Abwärme, die beim Betrieb der Leistungselektronik 70 entsteht, erfolgt.

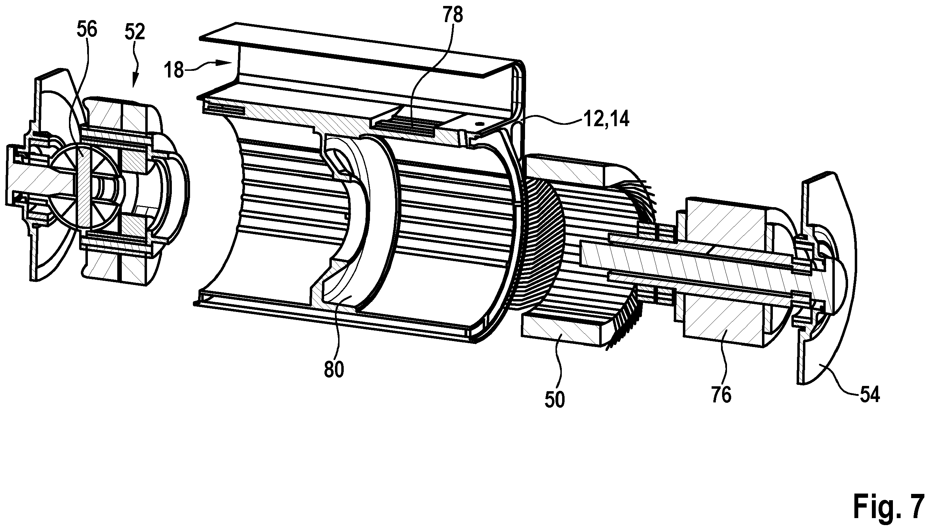

Figur 7 ist eine Explosionsdarstellung der Komponenten des erfindungsgemäß ausgeführten Systemgehäuses 12 zu entnehmen.

Aus Figur 7 geht hervor, dass der Montageraum 18 zur Aufnahme der in Figur 7 nicht dargestellten Leistungselektronik in das Systemgehäuse 12, ausgebildet als doppelwandiges extrudiertes Gehäuse 14, integriert ist. Die Kühlfläche 24, die den Montageraum 18 zur Aufnahme der Leistungselektronik begrenzt, ist mit einem Gehäusedurchbruch 78 versehen, so dass eine direkte Kühlung der in Figur 7 nicht dargestellten, jedoch im Montageraum 18 platzierbaren Leistungselektronik erfolgen kann.

Erfindungsgemäß befindet sich im Innenraum des Systemgehäuses 12 ein Lagerträger 80, über welchen die Rotorwelle des Rotors 76 der elektrischen Maschine zusätzlich abgestützt wird. Auf der einen Seite des Lagerträgers 80 befindet sich die Getriebeanordnung 52, aufgenommen im zweiten Lagerschild 56, während sich auf der gegenüberliegenden Seite des Lagerträgers 80, von der Statorwicklung 50 umschlossen, die Rotorwicklung des Rotors 76 befindet. Die Rotorwelle des Rotors 76 ist im ersten Lagerschild 54 aufgenommen.

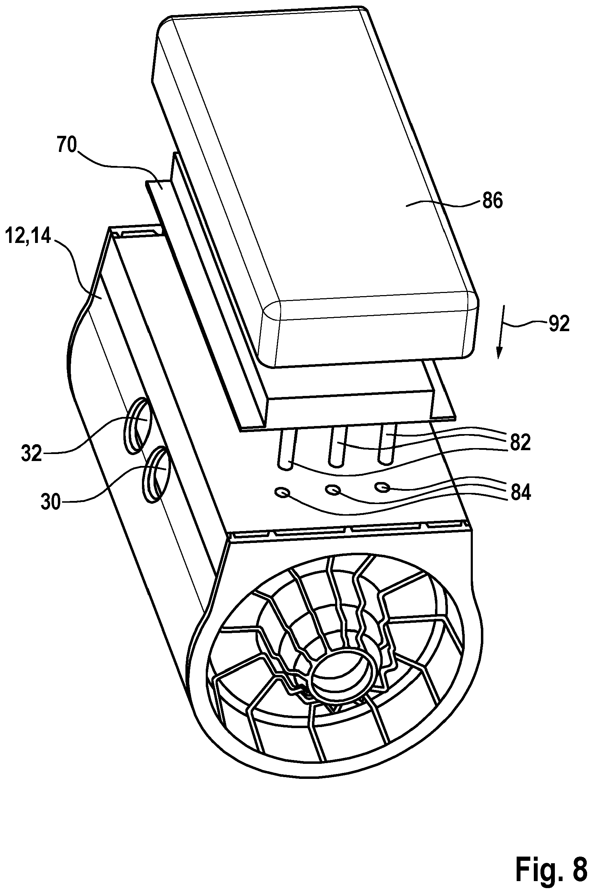

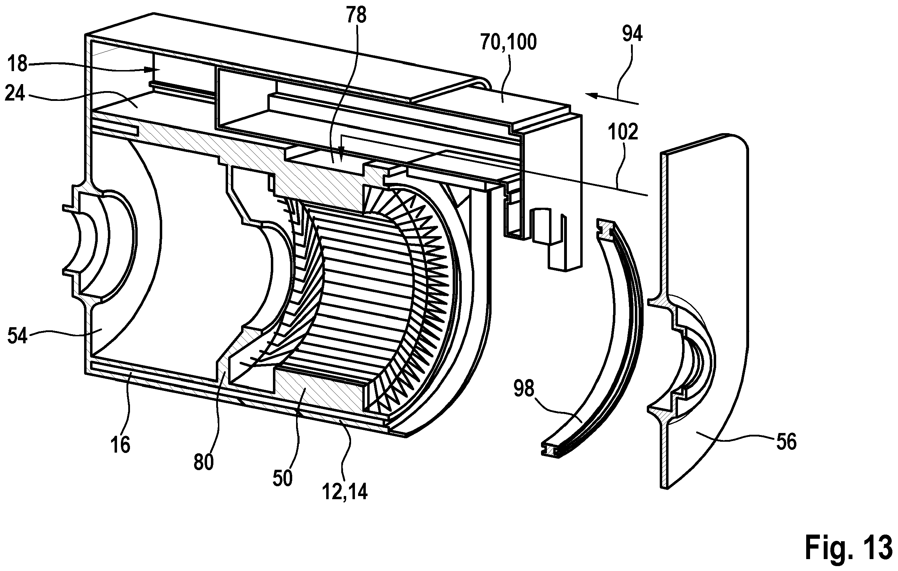

Aus der Darstellung gemäß Figur 8 geht hervor, dass auf der Oberseite des erfindungsgemäß vorgeschlagenen Systemgehäuses 12, ausgeführt als doppelwandiges extrudiertes Gehäuse 14, insbesondere auf der Kühlfläche 24 die Leistungselektronik 70 in vertikaler Montagerichtung 92 montiert wird. An ihrer vorzugsweise plan ausgebildeten Unterseite umfasst die Leistungselektronik 70 eine Anzahl von Kontaktierungen 82, die Kontaktierungsöffnungen 84, in korrespondierender Anzahl ausgeführt, durchsetzen und eine elektrische Verbindung zwischen der Leistungselektronik 70 und der in Figur 13 nicht dargestellten Statorwicklung 50 der elektrischen Maschine herstellen. Nach Montage der Leistungselektronik 70 in vertikaler Montagerichtung 92 auf der Oberseite des Systemgehäuses 12 erfolgt deren Abdeckung mittels des Deckels 86. Der Deckel 86 umschließt die Leistungselektronik 70 allseitig. Seitlich am Systemgehäuse 12 befinden sich der Einlass 30 sowie der Auslass 32 für das Kühlfluid. In der Ausführungsvariante gemäß Figur 8 erstrecken sich die Kontaktierungsöffnungen 84 im Wesentlichen in vertikaler Richtung korrespondierend zur Erstreckung der Kontaktierungen 82 an der Unterseite der Leistungselektronik 70.

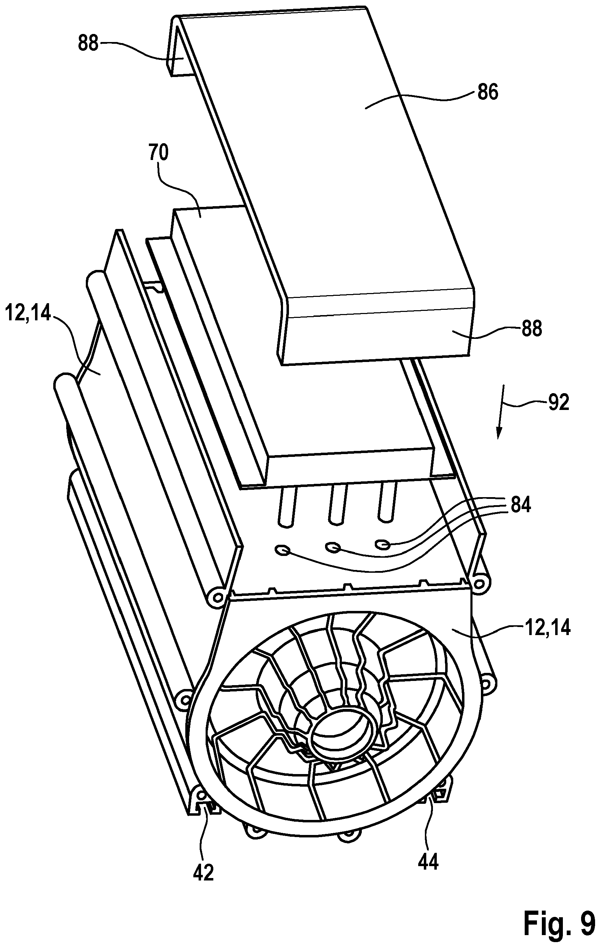

Figur 9 zeigt eine Ausführungsvariante des erfindungsgemäß vorgeschlagenen Systemgehäuses 12, bei dem die Leistungselektronik 70 ebenfalls in vertikaler Montagerichtung 92 auf der Kühlfläche 24 des Montageraums 18 elektrisch kontaktiert wird. Die Kontaktierungen 82 erstrecken sich im Wesentlichen vertikal verlaufend von der Unterseite der Leistungselektronik 70; dementsprechend sind die Kontaktierungsöffnungen 84 zur Statorwicklung 50 der elektrischen Maschine ausgeführt. Der Montageraum 18 zur Aufnahme der Leistungselektronik 70 ist von Seitenwänden begrenzt, die Teil des Systemgehäuses 12 sind, das erfindungsgemäß als doppelwandiges extrudiertes Gehäuse 14 ausgeführt ist.

Der Deckel 86 umfasst in dieser Ausführungsvariante Abkantungen 88 an den jeweils kurzen Seiten.

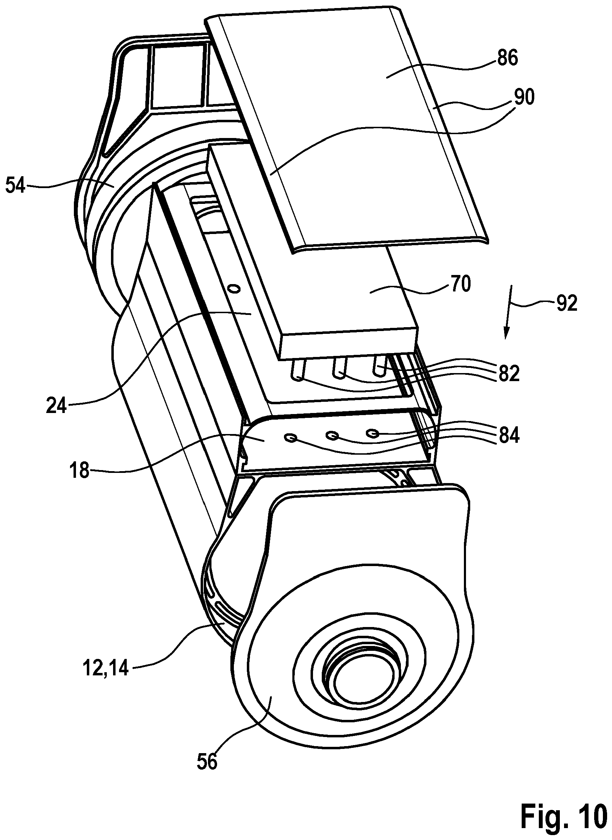

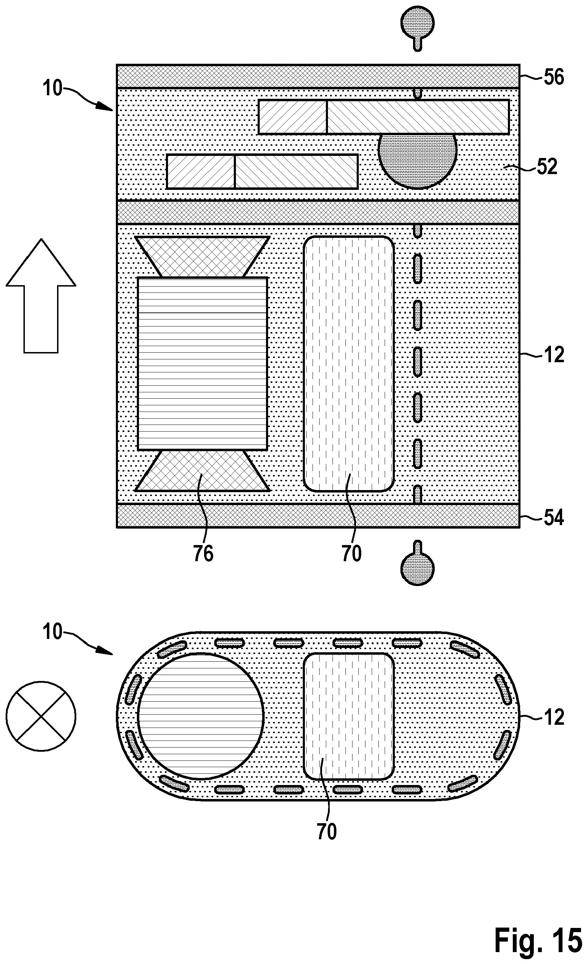

Figur 10 zeigt eine Ausführungsvariante des erfindungsgemäß vorgeschlagenen Systemgehäuses 12, dessen Komponenten hier in Explosionsdarstellung dargestellt sind. Das Systemgehäuse 12 wird durch das erste Lagerschild 54 und das zweite Lagerschild 56 nach der Montage der Komponenten gemäß den Figuren 7 bis 11 verschlossen. Auch in der Ausführungsvariante gemäß Figur 10 erfolgt die Montage der Leistungselektronik 70 im Wesentlichen in vertikaler Montagerichtung 92. Die Kontaktierungen 82 an der Unterseite der Leistungselektronik 70 werden in entsprechende korrespondierend ausgebildete Kontaktierungsöffnungen 84 der Kühlfläche 24 eingesteckt und stellen eine elektrische Verbindung zwischen der Leistungselektronik 70 und der hier nicht dargestellten Statorwicklung 50 der elektrischen Maschine dar. Der Deckel 86 ist in der Ausführungsvariante gemäß Figur 15 mit seitlich abgerundeten Wölbungen 90 versehen.

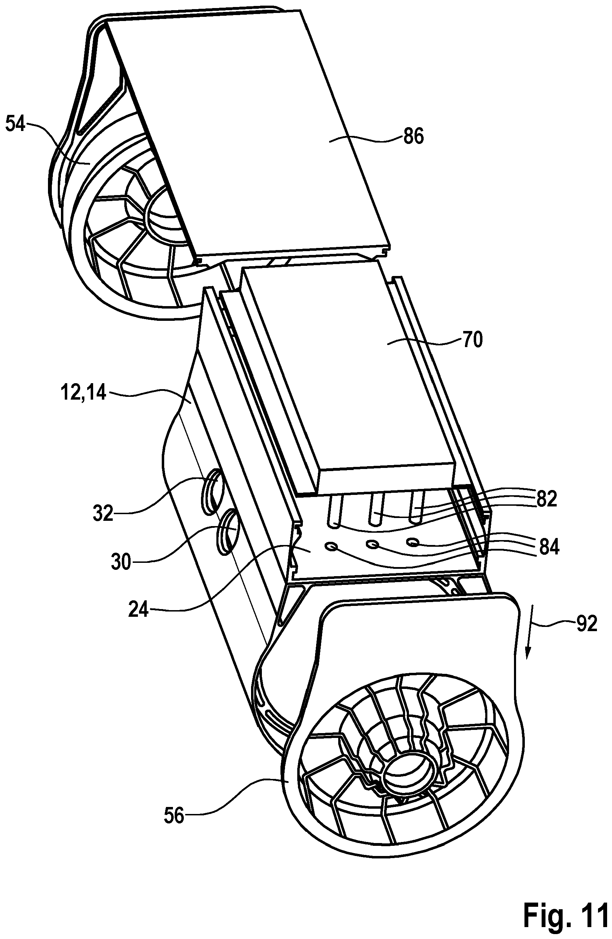

Figur 11 zeigt eine Ausführungsvariante des erfindungsgemäß vorgeschlagenen Systemgehäuses 12, ebenfalls ausgeführt als doppelwandiges extrudiertes Gehäuse 14, bei welchem am ersten Lagerschild 54 das Deckelteil 86 befestigt ist. Nach Montage der Leistungselektronik 70 im Montageraum 18 in im Wesentlichen vertikaler Montagerichtung 92 werden die sich an der Unterseite der Leistungselektronik 70 erstreckenden Kontaktierungen 82 in die in korrespondierender Anzahl ausgeführten Kontaktierungsöffnungen 84 in der Kühlfläche 24 elektrisch kontaktiert. Seitlich am Systemgehäuse 12 befinden sich der Einlass 30 und der Auslass 32 für das das doppelwandig ausgeführte extrudierte Gehäuse 14 durchströmende Kühlfluid.

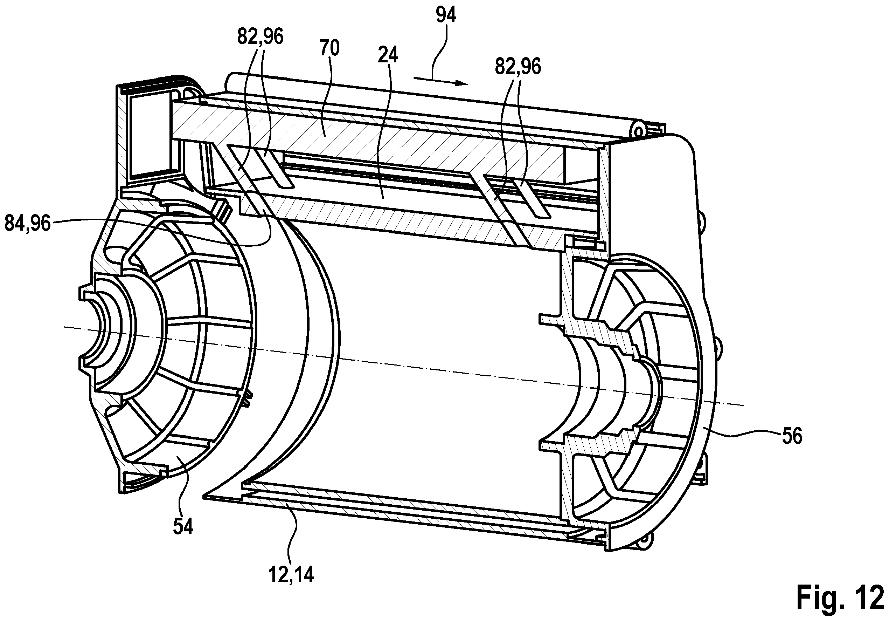

Figur 12 zeigt eine Ausführungsvariante des erfindungsgemäß vorgeschlagenen Systemgehäuses 12, bei der die Leistungselektronik 70 in horizontaler Montagerichtung 94 in den Montageraum 18 eingeschoben wird. Im Unterschied zu den vorstehend beschriebenen Ausführungsvarianten mit vertikaler Montagerichtung 92 der Leistungselektronik 70 verlaufen in der Darstellung gemäß Figur 12 die Kontaktierungen 82 an der Unterseite der Leistungselektronik 70 ebenso wie die Kontaktierungsöffnungen 84 in Schrägorientierung 96. Dies bedeutet, dass beim seitlichen Einschieben der Leistungselektronik 70 die in Schrägorientierung 96 angeordneten Kontaktierungen 82 in die Kontaktierungsöffnungen 84 einfahren und ein Flächenkontakt zwischen der Kühlfläche 24 und der Unterseite der Leistungselektronik 70 entsteht. Das Systemgehäuse 12, auch hier ausgeführt als doppelwandiges extrudiertes Gehäuse 14, ist vom ersten Lagerschild 54 und vom zweiten Lagerschild 56 verschlossen. An den Lagerschilden 54 und 56 befinden sich jeweils Flächen, die nach Montage der Leistungselektronik 70 im Montageraum 18 diesen verschließen.

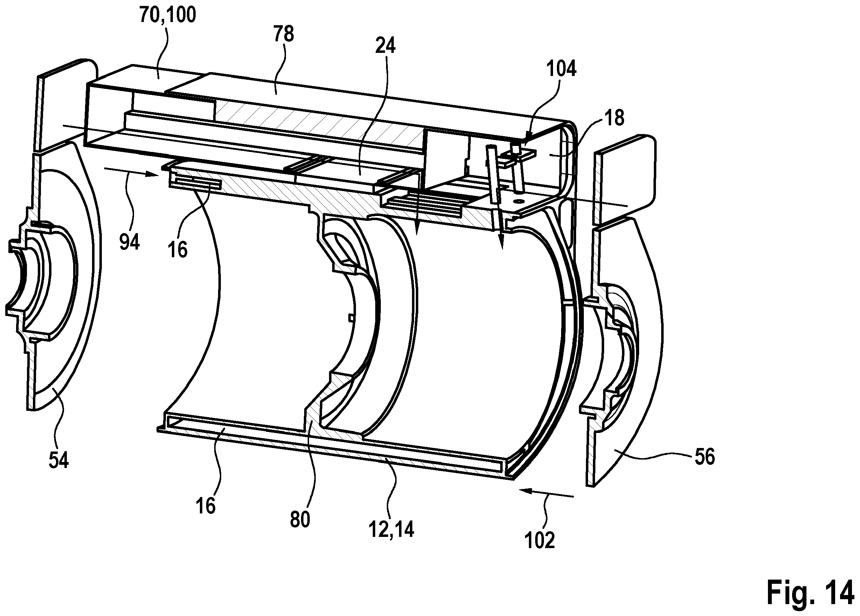

Die Figuren 13 und 14 zeigen Ausführungsvarianten des erfindungsgemäß vorgeschlagenen Systemgehäuses 12, bei welchen die Leistungselektronik 70 im Wesentlichen als Einschubteil 100 ausgeführt ist. Die als Einschubteil 100 ausgeführte Leistungselektronik 70 wird in horizontaler Montagerichtung 94 in den Montageraum 18 gemäß den Figuren 13 und 14 seitlich eingeschoben. Gemäß Figur 18 kann nach Einschieben der Leistungselektronik 70 deren Position im Montageraum 18 durch eine Halbschale 98 fixiert werden. Im Systemgehäuse 12 ist in der Ausführungsvariante gemäß Figur 13 der Gehäusedurchbruch 78 ausgebildet, so dass eine direkte Kühlung der Leistungselektronik 70 über das im Kühlkanalsystem 16 zirkulierende Kühlfluid erfolgen kann. Für den Fall, dass alternativ kein Gehäusedurchbruch 78 vorgesehen ist, kann eine indirekte Kühlung der Leistungselektronik 70 dadurch erfolgen, dass über die Kühlfläche 24 und eine unterhalb dieser verlaufenden Kühlverrippung 48 die Abwärme der Leistungselektronik 70 an das Kühlfluid übertragen werden kann. Aus Figur 13 geht hervor, dass mittig im Systemgehäuse 12, ausgeführt als doppelwandiges extrudiertes Gehäuse 14 mit Kühlkanalsystem 16, der Lagerträger 80 angeordnet ist, ebenso wie die Statorwicklung 50 in das Systemgehäuse 12 eingelassen ist. Mit Bezugszeichen 102 ist die Montagerichtung des zweiten Lagerschildes 56 nach Fixierung der Halbschale 98 bezeichnet.

Figur 14 zeigt die Montage der Leistungselektronik 70, ebenfalls ausgebildet als Einschubteil 100, in horizontaler Montagerichtung 94 in dem Montageraum 18. Nach Montage der als Einschubteil 100 ausgeführten Leistungselektronik 70 wird der Montageraum 18 durch das erste Lagerschild 54 sowie das zweite Lagerschild 56 verschlossen. In der Mitte des erfindungsgemäß vorgeschlagenen Systemgehäuses 12 befindet sich analog zur Darstellung gemäß Figur 13 der zusätzlich vorgesehene Lagerträger 80, der die hier nicht dargestellte Rotorwelle des Rotors 76 zusätzlich abstützt. Aus der Darstellung gemäß Figur 14 geht hervor, dass mindestens ein Kontaktierungsteil 104 den elektrischen Kontakt zwischen der Leistungselektronik 70 und der in Figur 14 nicht dargestellten Statorwicklung 50 herstellt. Nach Montage der Leistungselektronik 70 im Montageraum 18 erfolgt dessen Verschluss durch entsprechende Flächen, die am ersten Lagerschild 54 sowie am zweiten Lagerschild 56 ausgeführt sind.

Figur 15 zeigt eine alternative Ausführungsform des E-Achsen-Moduls 10.

Gleiche Elemente in Bezug auf die Figuren 1 bis 14 sind mit gleichen Bezugszeichen versehen und werden nicht näher erläutert. In dieser Ausführungsform ist die Getriebeanordnung 52 des E-Achsen-Moduls 10 mit Stirnradgetriebe ausgeführt.

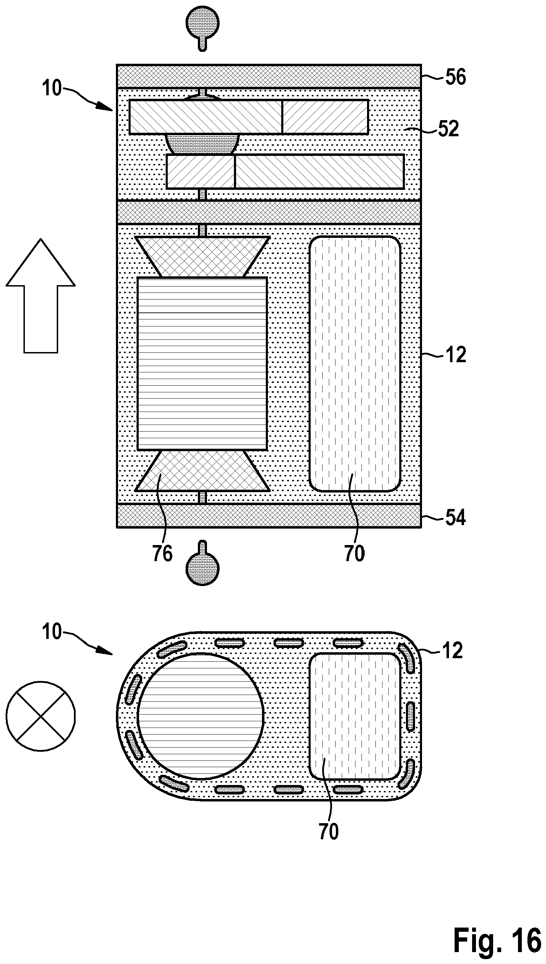

Figur 16 zeigt eine alternative Ausführungsform des E-Achsen-Moduls 10.

Gleiche Elemente in Bezug auf die Figuren 1 bis 15 sind mit gleichen Bezugszeichen versehen und werden nicht näher erläutert. In dieser Ausführungsform ist die Getriebeanordnung 52 des E-Achsen-Moduls 10 mit koaxialem Stirnradgetriebe ausgeführt.

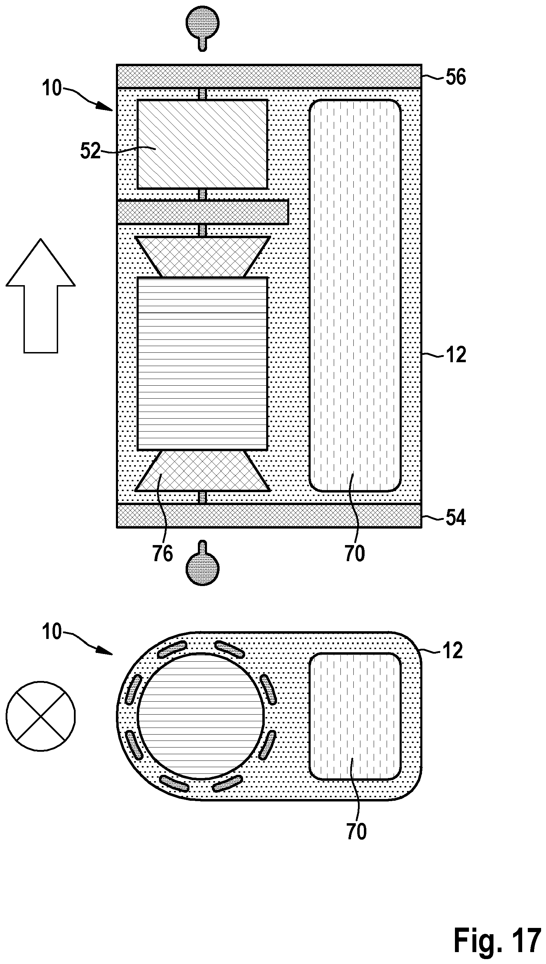

Figur 17 zeigt eine alternative Ausführungsform des E-Achsen-Moduls 10.

Gleiche Elemente in Bezug auf die Figuren 1 bis 16 sind mit gleichen Bezugszeichen versehen und werden nicht näher erläutert. In dieser Ausführungsform ist die Getriebeanordnung 52 des E-Achsen-Moduls 10 mit koaxialem Planetengetriebe ausgeführt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Systemgehäuse (12) eines E-Achsen-Moduls (10) für ein elektrisch angetriebenes Fahrzeug mit einer Statorwicklung (50) und einem Rotor (76) einer elektrischen Maschine, der in mindestens einem ersten Lagerschild (54) und einem zweiten Lagerschild (56) gelagert ist, wobei das Systemgehäuse (12) als doppelwandiges extrudiertes Gehäuse (14) ausgeführt ist, welches ein Kühlkanalsystem (16) umfasst, das sich unterhalb einer Kühlfläche (24) eines Montageraumes (18) einer Leistungselektronik (70) erstreckt, **dadurch gekennzeichnet, dass** das Systemgehäuse (12) einen mittig in dessen Innenraum montierten, zusätzlichen Lagerträger (80) aufnimmt, der eine im ersten Lagerschild (54) aufgenommene Rotorwelle des Rotors (76) der elektrischen Maschine zwischen der Statorwicklung (50) im Systemgehäuse (12) einerseits und einer auf der gegenüberliegenden Seite des Lagerträgers (80) im zweiten Lagerschild (56) aufgenommenen Getriebeanordnung (52) andererseits zusätzlich abstützt und einen nasslaufenden Teil des Systemgehäuses (12), in dem die Getriebeanordnung (52) untergebracht ist, von einem trockenen Teil des Systemgehäuses (12), in dem der Rortor (76) der elektrischen Maschine untergebracht ist, voneinander trennt.

2. Systemgehäuse (12) gemäß Anspruch 1, **dadurch gekennzeichnet, dass** dieses eine Außengeometrie (106) aufweist, die eine Anzahl von sich in Längsrichtung (108) des Systemgehäuses (12) verlaufender Rippen (110) aufweist.

3. Systemgehäuse (12) gemäß den Ansprüchen 1 bis 2, **dadurch gekennzeichnet, dass** an der Außengeometrie (106) des Systemgehäuses (12) mindestens ein Lagerungs- und/oder Dämpfungselement (34, 36) sowie mindestens ein Befestigungselement (26, 28) angeordnet sind.

4. Systemgehäuse (12) gemäß den Ansprüchen 1 bis 3, **dadurch gekennzeichnet, dass** die Außengeometrie (106) des Systemgehäuses (12) eine Anzahl von Nuten (38, 40, 42, 44), insbesondere Längsnuten, umfasst.

5. Systemgehäuse (12) gemäß den Ansprüchen 1 bis 4, **dadurch gekennzeichnet, dass** das Kühlkanalsystem (16) unterhalb der Kühlfläche (24) des Montageraums (18) der Leistungselektronik (70) mindestens eine Kühlverrippung (48) umfasst.

6. Systemgehäuse (12) gemäß den Ansprüchen 1 bis 5, **dadurch gekennzeichnet, dass** das Kühlkanalsystem (16) im Bereich der Kühlfläche (24) eine Öffnung (78) zur direkten Kühlung der Leistungselektronik (70) aufweist, oder die Kühlfläche (24) unterhalb der Leistungselektronik (70) mittelbar über die Kühlverrippung (48) temperiert wird.

7. Systemgehäuse (12) gemäß den Ansprüchen 1 bis 6, **dadurch gekennzeichnet, dass** die Leistungselektronik (76) in den Montageraum (18) in vertikaler Richtung (92) montiert wird, deren Kontaktierungen (82) Kontaktierungsöffnungen (84) der Statorwicklung (50) kontaktieren.

8. Systemgehäuse (12) gemäß den Ansprüchen 1 bis 6, **dadurch gekennzeichnet, dass** die Leistungselektronik (70) in dem Montageraum (18) in horizontaler Richtung (94) als ein Schubteil (100) montierbar ist.

9. Systemgehäuse (12) gemäß Anspruch 8, **dadurch gekennzeichnet, dass** sowohl die Kontaktierungen (82) der Leistungselektronik (70) als auch die Kontaktierungsöffnungen (84) der Statorwicklung (50) in Schrägorientierung (96) ausgeführt sind und die Leistungselektronik (70) als Einschubteil (100) im Montageraum (18) diese kontaktiert.

10. Systemgehäuse (12) gemäß Anspruch 8, **dadurch gekennzeichnet, dass** die Leistungselektronik (70) durch mindestens ein Kontaktierungsteil (104) mit der Statorwicklung (50) elektrisch kontaktiert ist.

11. Verwendung des Systemgehäuses (12) eines E-Achsen-Moduls (10) gemäß den Ansprüchen 1 bis 10 in einem elektrisch angetriebenen Fahrzeug.

## Claims

1. System housing (12) of an E-axle module (10) for an electrically driven vehicle, with a stator winding (50) and a rotor (76) of an electric machine, which is mounted in at least a first bearing plate (54) and a second bearing plate (56), wherein the system housing (12) is in the form of a double-walled extruded housing (14) which comprises a cooling duct system (16) which extends below a cooling surface (24) of an installation space (18) of power electronics (70), **characterized in that** the system housing (12) receives an additional bearing support (80) which is mounted centrally in the interior thereof and additionally supports a rotor shaft of the rotor (76) of the electric machine, which rotor shaft is received in the first bearing plate (54), between the stator winding (50) in the system housing (12), on the one hand, and a transmission arrangement (52), which is received on the opposite side of the bearing support (80) in the second bearing plate (56), on the other hand, and separates a wet-running part of the system housing (12), in which the transmission arrangement (52) is accommodated, from a dry part of the system housing (12), in which the rotor (76) of the electric machine is accommodated.

2. System housing (12) according to Claim 1, **characterized in that** said system housing has an external geometry (106) which has a number of ribs (110) running in the longitudinal direction (108) of the system housing (12) .

3. System housing (12) according to Claims 1 to 2, **characterized in that** at least one mounting and/or damping element (34, 36) and at least one fastening element (26, 28) are arranged on the external geometry (106) of the system housing (12).

4. System housing (12) according to Claims 1 to 3, **characterized in that** the external geometry (106) of the system housing (12) comprises a number of grooves (38, 40, 42, 44), in particular longitudinal grooves.

5. System housing (12) according to Claims 1 to 4, **characterized in that** the cooling duct system (16) comprises at least one cooling rib system (48) below the cooling surface (24) of the installation space (18) of the power electronics (70).

6. System housing (12) according to Claims 1 to 5, **characterized in that** the cooling duct system (16) has an opening (78) in the region of the cooling surface (24) for directly cooling the power electronics (70), or the cooling surface (24) below the power electronics (70) is indirectly temperature-controlled via the cooling rib system (48).

7. System housing (12) according to Claims 1 to 6, **characterized in that** the power electronics (76) are mounted in the installation space (18) in the vertical direction (92) and the contacts (82) thereof make contact with contacting openings (84) in the stator winding (50).

8. System housing (12) according to Claims 1 to 6, **characterized in that** the power electronics (70) can be mounted in the installation space (18) in the horizontal direction (94) as a push-in part (100).

9. System housing (12) according to Claim 8, **characterized in that** both the contacts (82) of the power electronics (70) and the contacting openings (84) of the stator winding (50) are formed in an oblique orientation (96), and the power electronics (70) as a push-in part (100) make contact with them in the installation space (18) .

10. System housing (12) according to Claim 8, **characterized in that** the power electronics (70) are electrically contacted by the stator winding (50) by means of at least one contacting part (104).

11. Use of the system housing (12) of an E-axle module (10) according to Claims 1 to 10 in an electrically driven vehicle.

## Revendications

1. Boîtier de système (12) d'un module d'essieu électrique (10) pour un véhicule à propulsion électrique comprenant un enroulement de stator (50) et un rotor (76) d'une machine électrique, qui est logé dans au moins un premier flasque (54) et un deuxième flasque (56), le boîtier de système (12) étant réalisé sous la forme d'un boîtier extrudé à double paroi (14), lequel comprend un système de canaux de refroidissement (16) qui s'étend au-dessous d'une surface de refroidissement (24) d'un espace de montage (18) d'une électronique de puissance (70), **caractérisé en ce que** le boîtier de système (12) accueille un support de palier supplémentaire (80), monté au centre de son espace intérieur, qui soutient en plus un arbre de rotor du rotor (76) de la machine électrique logé dans le premier flasque (54) entre l'enroulement de stator (50) dans le boîtier de système (12) d'une part et un arrangement de transmission (52) logé dans le deuxième flasque (56) sur le côté opposé du support de palier (80) d'autre part, et qui sépare une partie du boîtier de système (12) qui fonctionne en milieu humide, dans laquelle est logé l'arrangement de transmission (52), d'une partie sèche du boîtier de système (12) dans laquelle est logé le rotor (76) de la machine électrique.

2. Boîtier de système (12) selon la revendication 1, **caractérisé en ce qu'**il présente une géométrie extérieure (106) qui comprend un nombre de nervures (110) s'étendant dans la direction longitudinale (108) du boîtier de système (12).

3. Boîtier de système (12) selon les revendications 1 à 2, **caractérisé en ce qu'**au moins un élément de support et/ou d'amortissement (34, 36) ainsi qu'au moins un élément de fixation (26, 28) sont disposés sur la géométrie extérieure (106) du boîtier de système (12).

4. Boîtier de système (12) selon les revendications 1 à 3, **caractérisé en ce que** la géométrie extérieure (106) du boîtier de système (12) comporte un nombre de rainures (38, 40, 42, 44), notamment des rainures longitudinales.

5. Boîtier de système (12) selon les revendications 1 à 4, **caractérisé en ce que** le système de canaux de refroidissement (16) comporte au moins un nervurage de refroidissement (48) en dessous de la surface de refroidissement (24) de l'espace de montage (18) de l'électronique de puissance (70).

6. Boîtier de système (12) selon les revendications 1 à 5, **caractérisé en ce que** le système de canaux de refroidissement (16) possède, dans la zone de la surface de refroidissement (24), une ouverture (78) destinée au refroidissement direct de l'électronique de puissance (70), ou alors l'équilibrage de température de la surface de refroidissement (24) est effectué en dessous de l'électronique de puissance (70) indirectement par le biais du nervurage de refroidissement (48).

7. Boîtier de système (12) selon les revendications 1 à 6, **caractérisé en ce que** l'électronique de puissance (76) est montée dans l'espace de montage (18) dans la direction verticale (92), dont les contacts (82) entrent en contact avec des ouvertures de contact (84) de l'enroulement de stator (50).

8. Boîtier de système (12) selon les revendications 1 à 6, **caractérisé en ce que** l'électronique de puissance (70) peut être montée dans l'espace de montage (18) dans la direction horizontale (94) sous la forme d'une pièce coulissante (100).

9. Boîtier de système (12) selon la revendication 8, **caractérisé en ce qu'**aussi bien les contacts (82) de l'électronique de puissance (70) que les ouvertures de contact (84) de l'enroulement de stator (50) sont réalisés en une orientation oblique (96) et l'électronique de puissance (70), en tant que pièce insérée (100) dans l'espace de montage (18), entre en contact avec ceux-ci.

10. Boîtier de système (12) selon la revendication 8, **caractérisé en ce que** l'électronique de puissance (70) est en mise contact électrique avec l'enroulement de stator (50) par le biais d'au moins une pièce de mise en contact (104).

11. Utilisation du boîtier de système (12) d'un module d'essieu électrique (10) selon les revendications 1 à 10 dans un véhicule à propulsion électrique.
